Europäisches Patentamt

European Patent Office

Office européen des brevets

(19)

(11) Numéro de publication: **0 1 1 3 301**
**B1**

(12) **FASCICULE DE BREVET EUROPEEN**

(45) Date de publication du fascicule du brevet:
10.12.86

(51) Int. Cl.⁴: **B 23 Q 3/154**

(21) Numéro de dépôt: 83420192.3

(22) Date de dépôt: 27.12.83

(54) Plateau magnétique à aimants permanents.

(30) Priorité: 28.12.82 FR 8222198

(43) Date de publication de la demande:
11.07.84 Bulletin 84/28

(45) Mention de la délivrance du brevet:
10.12.86 Bulletin 86/50

(84) Etats contractants désignés:
AT BE CH DE GB IT LI LU NL SE

(56) Documents cités:
DE - A - 2 404 546
FR - A - 1 452 241
FR - A - 2 216 658
FR - A - 2 464 125

(73) Titulaire: BRAILLON & CIE Société Anonyme,
17,19 avenue de la Gare, F-73800 Montmelian (FR)

(72) Inventeur: Braillon, Philibert Maurice, 19 avenue de la
Gare, F-Montmelian (Savoie) (FR)

(74) Mandataire: Maureau, Pierre, Cabinet GERMAIN &
MAUREAU Le Britannia - Tour C 20, Boulevard E.
Déruelle, F-69003 Lyon (FR)

## Description

La présente invention se rapporte à un plateau magnétique à aimants permanents, comprenant un ensemble de pièces polaires, un ensemble d'aimants permanents fixes, et un ensemble d'aimants permanents mobiles disposés au-dessus d'une semelle en matériau magnétique, avec un dispositif de commande prévu pour déplacer longitudinalement l'ensemble des aimants permanents mobiles, entre une position «marche» dans laquelle les flux magnétiques créés par les aimants fixes et les aimants mobiles sont dirigés vers l'extérieur du plateau par les pièces polaires, et une position «arrêt» dans laquelle le flux magnétique créé par la totalité des aimants est court-circuité à l'intérieur du plateau, à l'intérieur duquel les pièces polaires, en forme de plaques, sont disposées en rangées parallèles, orientées longitudinalement, avec un pas polaire constant et en correspondance de manière à constituer aussi des alignements transversaux, ces plaques polaires s'étendant jusqu'à la face supérieure du plateau et étant isolées magnétiquement de la semelle, tandis que les éléments extrêmes, apparents sur les deux flancs longitudinaux du plateau, s'étendent depuis la semelle jusqu'à la face supérieure de ce plateau, les rangées parallèles de plaques polaires définissant entre elles des logements en forme de lames allongées, qui reçoivent chacun une série d'aimants permanents en forme de plaquettes rectangulaires, de même pas polaire que les pièces polaires et aimantés dans le sens transversal avec des polarités alternées, les aimants d'une série sur deux étant fixes et immobilisés en correspondance avec les plaques polaires et les aimants des autres séries, qui alternent avec les précédents, étant mobiles longitudinalement dans leurs logements sur la longueur d'un pas polaire, tous les aimants mobiles étant reliés au même dispositif de commande permettant de les déplacer entre une première position dans laquelle sont formés des alignements transversaux de plaques polaires et d'aimants avec les aimants mobiles aimantés dans le sens opposé des aimants fixes, et une autre position dans laquelle sont formés des alignements transversaux de plaques polaires et d'aimants avec les aimants mobiles aimantés dans le même sens que les aimants fixes.

Un plateau magnétique à aimants permanents de ce genre est décrit dans le document DE-A-2404546. Dans un plateau magnétique ainsi réalisé, en position de marche, les faces supérieures de toutes les plaques polaires forment autant de pôles, avec des polarités alternées à la fois dans le sens longitudinal et dans le sens transversal, suivant un quadrillage plus ou moins serré correspondant aux rangées longitudinales et aux alignements transversaux. Il en résulte la possibilité de fixer, sur toute la face supérieure du plateau qui ne comporte aucune zone neutre, des pièces de petites, moyennes ou grandes dimensions et de toutes formes géométriques.

Dans la construction habituelle des plateaux magnétiques à aimants permanents, le corps du plateau se trouve entouré d'un cadre rectangulaire, et le flux magnétique est dirigé seulement vers la face supérieure du plateau dans la position de marche. Ainsi, ces plateaux magnétiques ne possèdent qu'une seule face active, utilisable pour l'attraction et la fixation de pièces métalliques, par exemple des pièces à usiner sur des machines-outils. Ceci limite les possibilités d'utilisation des plateaux magnétiques habituels, quelle que soit leur puissance.

Dans le cas particulier du plateau magnétique à aimants permanents selon le document DE-A-2404546, cité plus haut, les plaques polaires sont enserrées entre deux plaques latérales apparentes, assemblées à la semelle, qui étant réalisées d'une seule pièce ne présentent aucune division polaire et ne peuvent constituer des faces attractives dans la position de marche. Ce plateau magnétique comporte donc, lui aussi, une seule face active.

La présente invention fournit un plateau magnétique du type rappelé ci-dessus, mais rendu actif à la fois sur toute sa surface supérieure et sur certaines de ses faces latérales, pour pouvoir attirer aussi des pièces contre ses deux flancs longitudinaux et éventuellement contre sa face latérale extrême opposée au dispositif de commande habituellement situé à une extrémité du plateau, de sorte que le plateau présentera au total trois ou quatre faces actives.

A cet effet, dans le plateau magnétique à aimants permanents selon l'invention, les éléments extrêmes, apparaissant sur les deux flancs longitudinaux du plateau magnétique, sont également des plaques polaires disposées en rangées et isolées magnétiquement les unes des autres par des séparations, de manière à former, en position de marche, deux faces latérales attractives.

Le plateau magnétique objet de l'invention présente ainsi deux rangées extrêmes de plaques polaires, qui apparaissent sur les flancs longitudinaux du plateau magnétique et définissent une alternance de pôles «N» et «S» le long de ces flancs; ceux-ci constituent donc, en position de marche, deux faces attractives supplémentaires. En rendant les premières plaques polaires de toutes les rangées apparentes sur la face d'extrémité du plateau opposée au dispositif de commande, on obtient en position de marche encore une quatrième face attractive. Le plateau magnétique objet de l'invention offre donc une grande universalité d'emploi.

En position d'arrêt, compte tenu de ce que toutes les rangées de plaques polaires intérieures sont isolées magnétiquement de la semelle, le flux magnétique se referme à l'intérieur du plateau, à travers les alignements transversaux de pièces polaires et d'aimants tous «en série», à travers les pièces polaires des rangées extrêmes, et à travers la semelle.

Suivant une forme de réalisation préférée de l'invention, les plaques polaires de chaque rangée longitudinale sont logées dans les évidements d'une grille allongée en matériau amagnétique, comprenant une partie inférieure voisine de la semelle, une partie supérieure ajourée de telle sorte que les plaques polaires affleurent à la face supérieure du plateau, et des séparations verticales reliant la partie inférieure à la partie supérieure. Avantageusement, les parties inférieures et supérieures des grilles logeant les rangées des plaques polaires sont profilées de manière à s'imbriquer les unes dans les autres tout en maintenant les rangées de plaques polaires espacées pour réserver les logements des séries d'aimants fixes et mobiles.

Ces grilles juxtaposées, en matériau amagnétique, assurent le maintien en place des plaques polaires, forment les entrefers nécessaires entre les plaques polaires de polarités opposées, réalisent par leur parties inférieures imbriquées l'isolation magnétique entre les plaques polaires et la semelle (sauf pour les plaques polaires des deux rangées extrêmes), forment par leurs parties supérieures imbriquées la face supérieure lisse du plateau, et enfin ménagent entre elles les logements qui reçoivent les séries d'aimants, alternativement fixes et mobiles. Ces grilles peuvent être non seulement juxtaposées, mais encore assemblées définitivement les unes aux autres par collage de leurs parties inférieures et supérieures.

Selon une autre caractéristique de l'invention les aimants de chaque série d'aimants sont supportés par un peigne en matériau amagnétique, comportant des dents séparant les aimants les uns des autres, les peignes étant alternativement montés fixes et mobiles longitudinalement dans leurs logements, tous les peignes mobiles étant reliés entre eux par l'une de leurs extrémités à une même tige de commande transversale, elle-même reliée au dispositif de commande qui est par exemple constitué par un mécanisme du type bielle-manivelle.

Le montage des plaques polaires dans des grilles, et des aimants fixes ou mobiles sur des peignes, rend la fabrication du plateau magnétique rationnelle et économique, avec des techniques très automatisées, et permet de réaliser des plateaux de dimensions diverses par juxtaposition d'un nombre plus ou moins élevé des mêmes sous-ensembles préfabriqués.

De toute façon, l'invention sera bien comprise à l'aide de la description qui suit, en référence au dessin schématique annexé représentant, à titre d'exemple non limitatif, une forme de réalisation de ce plateau magnétique à aimants permanents:

Fig. 1 est une vue générale en perspective, d'un plateau magnétique conforme à la présente invention;

fig. 2 est une vue en coupe horizontale de ce plateau magnétique, en position de marche, suivant 2–2 de fig. 3;

fig. 3 en est une vue en coupe longitudinale, suivant 3–3 de fig. 2;

fig. 4 en est une vue en coupe transversale, toujours en position de marche, suivant 4–4 de fig. 2;

fig. 5 est une vue en coupe horizontale du même plateau magnétique, similaire à fig. 2 mais en position d'arrêt;

fig. 6 en est une vue en coupe transversale, en position d'arrêt, suivant 6–6 de fig. 5;

fig. 7 est une vue partielle, en section passant par un plan vertical, montrant certains détails constructifs du plateau magnétique;

fig. 8 est une vue en perspective éclatée montrant certains éléments de ce plateau magnétique, en particulier les grilles et les peignes.

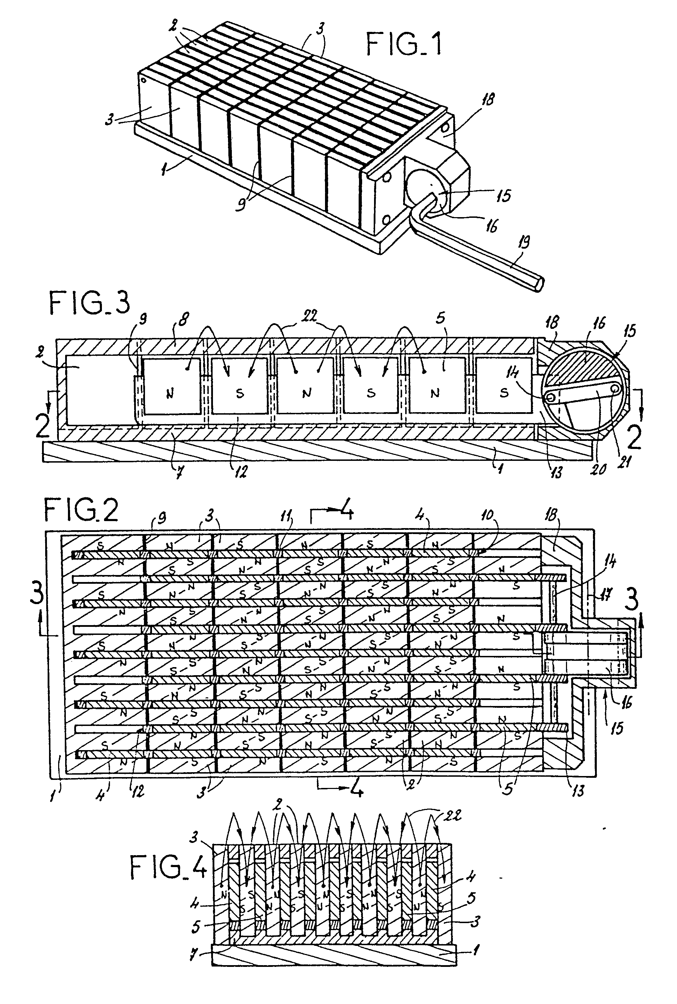

Le plateau magnétique représenté au dessin comporte, au-dessus d'une semelle rectangulaire (1), des rangées parallèles de plaques polaires (2, 3) orientées longitudinalement, dont l'ensemble forme un corps parallélépipédique – voir fig. 1. Entre deux rangées consécutives de plaques polaires (2, 3) est ménagé un espace, en forme de lame allongée, servant de logement à des aimants permanents (4, 5).

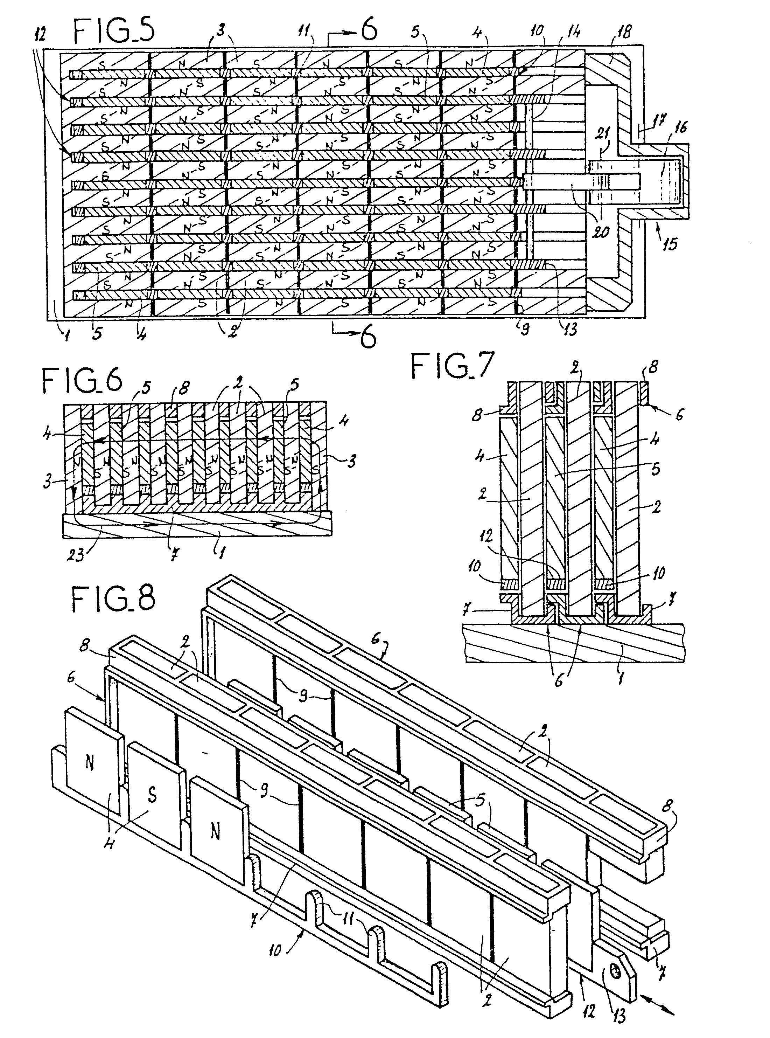

Si l'on excepte les plaques polaires appartenant aux deux rangées extrêmes, les plaques polaires (2) de chaque rangée sont logées dans les évidements d'une grille allongée (6) en matériau amagnétique comprenant une partie profilée inférieure (7) et une partie profilée supérieure (8), reliées entre elles par des séparations verticales (9) – voir fig. 7 et 8. Les parties profilées inférieures (7) des différentes grilles (6) sont en contact avec la semelle (1) et s'imbriquent les unes dans les autres. Les parties profilées supérieures (8) des différentes grilles (6), qui définissent la face supérieure plane du plateau magnétique, s'imbriquent également les unes dans les autres. Les séparations verticales (9) délimitent des cases rectangulaires, recevant chacune une plaque polaire (2). Les parties profilées supérieures (8) de toutes les grilles (6) sont en outre ajourées, de sorte que toutes les pièces polaires (2) affleurent à la face supérieure du plateau magnétique.

Les plaques polaires (3) appartenant aux deux rangées extrêmes ne sont pas isolées magnétiquement de la semelle (1), mais s'étendent au contraire depuis la semelle (1), avec laquelle elles sont en contact, jusqu'à la face supérieure du plateau magnétique. De plus, les plaques polaires (3) sont apparentes sur les deux flancs longitudinaux du plateau magnétique. Ces plaques polaires (3) sont elles aussi isolées magnétiquement les unes des autres, dans chaque rangée extrême, par des séparations verticales (9).

Les séparations verticales (9) des différentes rangées de plaques polaires (2, 3) s'étendent dans les plans transversaux, de sorte que les plaques polaires (2, 3) se répartissent non seulement en rangées longitudinales mais aussi en alignements transversaux et forment ainsi un quadrillage, apparaissant à la face supérieure du plateau magnétique.

Les logements des aimants permanents (4, 5) sont délimités par les parties profilées (7, 8) des grilles (6) et par les plaques polaires (2, 3) insérées dans ces grilles (6). Un logement sur deux reçoit une série d'aimants fixes (4), en forme de plaquettes rectangulaires, supportés par un peigne (10) en matériau amagnétique – voir fig. 8. Les dents (11) du peigne (10) définissent, pour les aimants (4), un pas polaire égal à celui des plaques polaires (2, 3), et ces aimants fixes (4) sont placés en correspondance avec les alignements transversaux de plaques polaires (2, 3).

Dans chaque série d'aimants fixes (4), supportés par le même peigne (10), les aimants sont aimantés dans le sens transversal, avec des polarités «N» et «S» alternées. Par contre, dans chaque alignement transversal d'aimants fixes (4), tous les aimants (4) sont aimantés dans le même sens.

Les autres logements, ménagés entre les rangées de plaques polaires (2), reçoivent des séries d'aimants permanents (5) qui contrairement aux précédents sont mobiles. Les aimants mobiles (5), en forme de plaquettes, sont supportés par d'autres peignes (12) en matériau amagnétique qui sont montés coulissants dans leurs logements, en direction longitudinale. Une extrémité de chaque peigne (12) comporte une tête (13) traversée par une tige de commande transversale (14) qui réunit entre eux tous les peignes coulissants (12).

Dans chaque série d'aimants mobiles (5), les aimants sont aimantés dans le sens transversal, avec des polarités «N» et «S» alternées, le pas polaire étant le même que celui des plaques polaires (2, 3) et des aimants fixes (4). Tous les aimants mobiles (5) appartenant à un même alignement transversal sont aimantés dans le même sens.

La tige (14) est associée à un dispositif de commande (15), placé à une extrémité du plateau magnétique, qui permet de déplacer cette tige (14), donc l'ensemble des peignes (12) et des aimants mobiles (5), sur la longueur d'un pas polaire. Dans la forme de réalisation représentée au dessin, le dispositif de commande (15) comprend un tambour (16) monté tournant autour de son axe (17), dans un logement appartenant à une pièce rapportée (18), ce tambour (16) étant manoeuvrable depuis l'extérieur au moyen d'une clé (19) visible sur la fig. 1. Une bielle (20) relie un axe excentré (21), solidaire du tambour (16), à la tige (14). La rotation du tambour (16) autour de son axe (17) est convertie, par ce mécanisme du type bielle-manivelle, en un mouvement de translation de l'ensemble des peignes (12), donc en un déplacement simultané de tous les aimants mobiles (5).

Dans une première position extrême de ce mouvement (voir fig. 1 à 4), qui est la position de marche, tous les aimants mobiles (5) sont amenés en correspondance avec les plaques polaires (2, 3) et avec les aimants fixes (4), de telle sorte que, dans chaque alignement transversal d'aimants et de plaques polaires, les aimants mobiles (5) se trouvent aimantés dans le sens opposé des aimants fixes (4). Ainsi, dans chaque alignement considéré, les plaques polaires (2, 3) sont alternativement «N» et «S», de sorte qu'entre ces plaques polaires les lignes de force (22) du champ magnétique peuvent seulement se refermer par l'extérieur comme le montre la fig. 4. Certaines lignes de force (22) se referment aussi dans le sens longitudinal entre les plaques polaires consécutives (2, 3) de polarités opposées de chaque rangée de plaques polaires comme l'illustre la fig. 3. Toute la face supérieure du plateau magnétique est ainsi rendue active pour la fixation de pièces. De même les grandes faces des plaques polaires (3), apparentes sur les deux flancs longitudinaux du plateau magnétique sont alternativement «N» et «S», ce qui rend ces flancs également actifs. Enfin, la face extrême du plateau magnétique éloignée de la pièce rapportée (18), donc du dispositif de commande (15), peut constituer une quatrième face active dans cette position de marche, si les plaques polaires (2, 3) sont aussi apparentes sur cette face.

Par un déplacement de la longueur d'un pas polaire, commandé au moyen du dispositif (15), tous les aimants mobiles (5) sont amenés dans leur autre position extrême, où ils se trouvent aussi en correspondance avec les plaques polaires (2, 3) et avec les aimants fixes (4) – voir fig. 5. Dans chaque alignement transversal d'aimants et de pièces polaires, les aimants mobiles (5) se trouvent alors aimantés dans le même sens que les aimants fixes (4) de sorte que tous ces aimants se trouvent montés «en série». En raison de l'isolation magnétique réalisée par l'ensemble des parties profilées inférieures (7) des cadres (6) entre les plaques polaires intérieures (2) et la semelle (1), les lignes de force (23) se referment alors nécessairement par les plaques polaires extrêmes (3), en contact avec la semelle (1), et par la semelle (1) elle-même – voir fig. 6. Le flux magnétique est ainsi court-circuité par la semelle (1) et les différentes faces du plateau magnétique n'attirent plus les pièces qui y avaient été précédemment fixées.

**Revendications**

1. Plateau magnétique à aimants permanents, comprenant un ensemble de pièces polaires (2, 3), un ensemble d'aimants permanents fixes (4), et un ensemble d'aimants permanents mobiles (5) disposés au-dessus d'une semelle en matériau magnétique, avec un dispositif de commande (15) prévu pour déplacer longitudinalement l'ensemble des aimants permanents mobiles (5), entre une position «marche» dans laquelle les flux magnétiques créés par les aimants fixes (4) et les aimants mobiles (5) sont dirigés vers l'extérieur du plateau par les pièces polaires (2, 3), et une position «arrêt» dans laquelle le flux magnétique créé par la totalité des aimants (4, 5) est court-circuité à l'intérieur du plateau, à l'intérieur duquel les pièces polaires (2), en forme de plaques, sont disposées en rangées parallèles, orientées longitudinalement, avec un pas polaire constant et en correspondance de manière à constituer aussi des alignements transversaux, ces plaques polaires (2) s'étendant jusqu'à la face supérieure du plateau et étant isolées magnétiquement de la semelle (1), tandis que les éléments extrêmes (3), apparents sur les deux flancs longitudinaux du plateau, s'étendent depuis la semelle (1) jusqu'à la face supérieure de ce plateau, les rangées parallèles de plaques polaires (2, 3) définissant entre elles des logements en forme de lames allongées, qui reçoivent chacun une série d'aimants permanents (4, 5) en forme de plaquettes rectangulaires, de même pas polaire que les pièces polaires (2, 3) et aimantés dans le sens transversal avec des polarités alternées, les aimants (4) d'une série sur deux étant fixes et immobilisés en correspondance avec les plaques polaires (2, 3) et les aimants (5) des autres séries, qui alternent avec les précédents, étant mobiles longitudinalement dans leurs logements, sur la longueur d'un pas polaire, tous les aimants mobiles (5) étant reliés au même dispositif de commande (15) permettant de les déplacer entre une première position dans laquelle sont formés des alignements transversaux de plaques polaires (2, 3) et d'aimants (4, 5) avec les aimants mobiles (5) aimantés dans le sens opposé des aimants fixes (4), et une autre position dans laquelle sont formés des alignements transversaux de plaques polaires (2, 3) et d'aimants (4, 5) avec les aimants mobiles (5) aimantés dans le même sens que les aimants fixes (4), caractérisé en ce que les éléments extrêmes, apparaissant sur les deux flancs longitudinaux du plateau magnétique, sont également des plaques polaires (3) disposées en rangées et isolées magnétiquement les unes des autres par des séparations (9), de manière à former, en position de marche, deux faces latérales attractives.

2. Plateau magnétique à aimants permanents selon la revendication 1, caractérisé en ce que les premières plaques polaires (2, 3) de toutes les rangées sont apparentes sur la face d'extrémité du plateau opposée au dispositif de commande (15), pour constituer en position de marche une quatrième face attractive.

3. Plateau magnétique à aimants permanents selon la revendication 1 ou 2, caractérisé en ce que les plaques polaires (2, 3) de chaque rangée longitudinale sont logées dans les évidements d'une grille allongée (6) en matériau amagnétique, comprenant une partie inférieure (7) voisine de la semelle (1), une partie supérieure (8) ajourée de telle sorte que les plaques polaires (2, 3) affleurent à la face supérieure du plateau, et des séparations verticales (9) reliant la partie inférieure (7) à la partie supérieure (8).

4. Plateau magnétique à aimants permanents selon la revendication 3, caractérisé en ce que les parties inférieures (7) et supérieures (8) des grilles (6) logeant les rangées de plaques polaires (2, 3) sont profilées de manière à s'imbriquer les unes dans les autres tout en maintenant les rangées de plaques polaires (2, 3) espacées pour réserver les logements des séries d'aimants fixes (4) et mobiles (5).

5. Plateau magnétique à aimants permanents selon la revendication 4, caractérisé en ce que les grilles (6) logeant les rangées de plaques polaires (2, 3) sont assemblées les unes aux autres par collage de leurs parties inférieures (7) et supérieures (8).

6. Plateau magnétique à aimants permanents selon l'une quelconque des revendications 1 à 5, caractérisé en ce que les aimants (4, 5) de chaque série d'aimants sont supportés par un peigne (10, 12) en matériau amagnétique, comportant des dents (11) séparant les aimants les uns des autres, les peignes étant alternativement montés fixes (10) et mobiles longitudinalement (12) dans leurs logements, tous les peignes mobiles (12) étant reliés entre eux par l'une de leurs extrémités (13) à une même tige de commande transversale (14), elle-même reliée au dispositif de commande (15).

7. Plateau magnétique à aimants permanents selon la revendication 6, caractérisé en ce que le dispositif de commande (15) comprend un tambour (16) manoeuvrable depuis l'extérieur, monté tournant autour de son axe (17) dans un logement appartenant à une pièce (18) rapportée à une extrémité du plateau, ce tambour (16) comportant un axe excentré (21) relié par une bielle (20) à la tige de commande (14) qui relie entre eux tous les peignes mobiles (12).

**Patentansprüche**

1. Mit Dauermagneten ausgerüstete Magnetspannplatte, beinhaltend eine Gesamtheit von Polstücken (2, 3), eine Gesamtheit von ortsfesten Dauermagneten (4) und eine Gesamtheit von beweglichen Dauermagneten (5), die über einer Fussplatte aus magnetischem Material angeordnet sind, mit einer Betätigungsvorrichtung (15) für die Längsverlagerung der Gesamtheit der beweglichen Dauermagnete (5) zwischen einer Einschaltstellung, in der die von den ortsfesten Dauermagneten (4) und den beweglichen Dauermagneten (5) erzeugten magnetischen Flüsse zum Äusseren der Magnetspannplatte durch die Polstücke (2, 3) gerichtet sind, und einer Abschaltstellung, in der der von der Gesamtheit der Magneten (4, 5) erzeugte magnetische Fluss im Inneren der Spannplatte kurzgeschlossen ist, in welchem Inneren die Polstücke (2), in Form von Platten, in Längsrichtung orientiert in parallelen Reihen angeordnet sind, mit einem konstanten Polschritt und in Übereinstimmung mit einer Anordnungsweise, dass sie auch Querfluchten bilden, wobei diese Polplatten (2) sich bis zur Oberfläche der Spannplatte erstrecken und magnetisch gegenüber der Fussplatte (1) isoliert sind, während sich die Aussenelemente (3), die auf den Längsflankenseiten der Spannplatte in Erscheinung treten, sich von der Fussplatte (1) bis zur Oberfläche der Spannplatte erstrecken, wobei die parallelen Reihen der Polplatten (2, 3) zwischen sich Ausnehmungen in Form länglicher Lamellen definieren, die jede eine Reihe von Dauermagneten (4, 5) in Form rechteckiger Platten aufnehmen, mit dem gleichen Polschritt wie die Polstücke (2, 3) und magnetisch in Querrichtung mit alternierender Polarität, wobei die Magnete (4) einer von zwei Reihen ortsfest sind und in Übereinstimmung mit den Polplatten (4, 5) immobilisiert sind und die Magnete (5) der anderen Reihen, die mit den vorhergehenden alternieren, in Längsrichtung in ihren Ausnehmungen über die Länge eines Polschrittes beweglich sind, alle beweglichen Magnete (5) mit der gleichen Betätigungsvorrichtung (15) verbunden sind, die es ermöglicht, sie zwischen einer ersten Stellung zu verlagern, in der Querfluchten der Polplatten (2, 3) und der Magnete (4, 5) mit den beweglichen Magneten (5) entgegengesetzt magnetisch zu den festen Magneten (4) sowie einer anderen Stellung, in der Querfluchten der Polplatten (2, 3) und der Magnete (4, 5) gebildet sind mit den beweglichen Magneten (5) magnetisch im gleichen Sinn wie die ortsfesten Magnete (4), dadurch gekennzeichnet, dass die äusseren Elemente, die auf den beiden Längsflankenseiten der magnetischen Spannplatte erscheinen, ebenfalls Polplatten (3) sind, die in Reihen angeordnet und magnetisch durch Abtrennungen (9) voneinander isoliert sind, derart, dass die in der Einschaltstellung zwei anziehende Seitenflächen bilden.

2. Mit Dauermagneten ausgerüstete Magnetspannplatte nach Anspruch 1, dadurch gekennzeichnet, dass die ersten Polplatten (2, 3) aller Reihen auf der der Betätigungsvorrichtung (15) der Spannplatte gegenüberliegenden Aussenfläche erscheinen, um in der Einschaltstellung eine vierte anziehende Fläche zu bilden.

3. Mit Dauermagneten ausgerüstete Magnetspannplatte nach Anspruch 1 oder 2, dadurch gekennzeichnet, dass die Polplatten (2, 3) einer jeden Längsreihe in den Aussparungen eines länglichen Gitterrostes (6) aus nichtmagnetischem Material aufgenommen sind, der einen unteren Abschnitt (7) benachbart der Fussplatte (1), einen oberen Abschnitt (8), der derart durchbrochen ist, dass die Polplatten (2, 3) glatt mit der Oberfläche der Spannplatte abschliessen, und vertikale Abtrennungen (9) beinhaltet, die den unteren Abschnitt (7) mit dem oberen Abschnitt (8) verbinden.

4. Mit Dauermagneten ausgerüstete Magnetspannplatte nach Anspruch 3, dadurch gekennzeichnet, dass die unteren Abschnitte (7) und die oberen Abschnitte (8) der Gitterroste (6), die die Reihen der Polplatten (2, 3) aufnehmen, derart profiliert sind, dass sie einander überlappen und doch dabei die Reihen der Polplatten (2, 3) abständig halten, um die Aufnahme der Reihen der ortsfesten Magnete (4) und der beweglichen Magnete (5) zu reservieren.

5. Mit Dauermagneten ausgerüstete Magnetspannplatte nach Anspruch 4, dadurch gekennzeichnet, dass die die Reihen der Polplatten (2, 3) aufnehmenden Gitterroste (6) durch Verkleben ihrer unteren Abschnitte (7) und oberen Abschnitte (8) miteinander verbunden sind.

6. Mit Dauermagneten ausgerüstete Magnetspannplatte nach einem der Ansprüche 1 bis 5, dadurch gekennzeichnet, dass die Magnete (4, 5) einer jeden Reihe von Magneten von einem Kamm (10, 12) aus einem nichtmagnetischen Material getragen sind, der Zinken (11) aufweist, die Magnete voneinander trennen, wobei die Kämme alternierend ortsfest (10) und längs beweglich (12) in ihren Aufnahmen montiert sind und alle beweglichen Kämme (12) untereinander mit dem einen ihrer Enden (13) mit der gleichen transversalen Betätigungsstange (14) verbunden sind, die ihrerseits mit der Betätigungsvorrichtung (15) verbunden ist.

7. Mit Dauermagneten ausgerüstete Magnetspannplatte nach Anspruch 6, dadurch gekennzeichnet, dass die Betätigungsvorrichtung (15) eine von aussen betätigbare Trommel (16) aufweist, die drehbar um eine Achse (17) in einer Aufnahme montiert ist, die zu einem Teil (18) gehört, das an das eine Ende der Spannplatte angesetzt ist, wobei diese Trommel (16) eine Exzenterachse (21) trägt, die über ein Pleuel (20) mit der Betätigungsstange (14) verbunden ist, die untereinander alle beweglichen Kämme (12) verbindet.

**Claims**

1. Magnetic chuck using permanent magnets, comprising a set of pole pieces (2, 3), a set of fixed permanent magnets (4) and a set of movable permanent magnets (5) arranged on top of a base plate of magnetic material, and having a control device (15) intended to displace longitudinally the set of movable permanent magnets (5) between a «working» position in which the magnetic fluxes formed by the fixed magnets (4) and the movable magnets (5) are directed towards the exterior of the chuck by the pole pieces (2, 3) and an «inoperative» position in which the magnetic flux formed by all the magnets (4, 5) is short-circuited inside the chuck, inside which the pole pieces (2) in the form of plates, are arranged in parallel rows, oriented longitudinally, and have a constant and corresponding pole pitch so as to form also transverse alignments, these pole plates (2) extending as far as the upper face of the chuck and being magnetically isolated from the base plate (1), while the end elements (3), visible on the two longitudinal sides of the chuck, extend from the base plate (1) as far as the upper face of this chuck, the parallel rows of pole plates (2, 3) define between them housings in the form of elongate strips, each of which receives a series of permanent magnets (4, 5) in the form of rectangular blocks having the same pole pitch as the pole pieces (2, 3) and magnetised in the transverse direction with alternate polarities, the magnets (4) of one series out of two being fixed and immobilised corresponding to the pole plates (2, 3) and the magnets (5) of the other series, which alternate with the former, being movable longitudinally in their housings by the length of one pole pitch, all the movable magnets (5) being connected to the same control device (15) permitting them to be displaced between a first position in which the pole plates (2, 3) and magnets (4, 5) are transversely aligned with the movable magnets (5) magnetised in the opposite manner to the fixed magnets (4), and a second position in which the pole plates (2, 3) and magnets (4, 5) are transversely aligned with the movable magnets (5) magnetised in the same manner as the fixed magnets (4), characterised in that the end elements, appearing on the two longitudinal sides of the magnetic chuck, are also pole plates (3) arranged in rows and magnetically isolated one from the other by spacing means (9) in such a manner as to form, in the working position, two lateral attractive faces.

2. Magnetic chuck using permanent magnets according to claim 1, characterised in that the first pole plates (2, 3) of every row are visible on the end face of the chuck opposed to the control device (15) to form, in the working position, a fourth attractive face.

3. Magnetic chuck using permanent magnets according to claim 1 or 2, characterised in that the pole plates (2, 3) of each longitudinal row are housed in recesses in an elongate grid (6) of nonmagnetic material comprising a lower part (7) adjacent the base plate (1), an upper plate (8) perforated so that the pole plates (2, 3) are flush with the upper face of the chuck, and vertical spacing means (9) connecting the lower part (7) to the upper part (8).

4. Magnetic chuck using permanent magnets according to claim 3, characterised in that the lower parts (7) and the upper parts (8) of the grids (6) housing the rows of pole plates (2, 3) have profiles such that they fit one into another while maintaining the spacing of the row of pole plates (2, 3) for the housings for the series of fixed (4) and movable (5) magnets.

5. Magnetic chuck using permanent magnets according to claim 4, characterised in that the grids (6) housing the rows of polar plates (2, 3) are joined one to another by gluing their lower (7) and upper (8) parts.

6. Magnetic chuck using permanent magnets according to any one of claims 1 to 5, characterised in that the magnets (4, 5) of each series of magnets are supported by a comb (10, 12) of nonmagnetic material having teeth (11) separating the magnets one from another, the combs being mounted alternately fixed (10) and movable (12) longitudinally in their housings, all the movable combs (12) being linked one to another by connection of one of their ends (13) to the same transverse control rod (14), itself connected to the control device (15).

7. Magnetic chuck using permanent magnets according to claim 6, characterised in that the control device (15) comprises a drum (16) that can be operated from the outside and is mounted so that it can rotate about its axis (17) in a housing associated with a part (18) connected to one end of the chuck, this drum (16) having an eccentric shaft (21) connected by a coupler (20) to the control rod (14) which links all the movable combs (12) to one another.

0113301

FIG_1

FIG_3

FIG_2

FIG_4

9

# FIG.5

# FIG.6

# FIG.7

# FIG.8